# EUROPÄISCHE PATENTANMELDUNG

(11) **EP 3 290 142 A1**
(43) Veröffentlichungstag der Anmeldung: **07.03.2018**
(21) Anmeldenummer: 16186324.6
(22) Anmeldetag: 30.08.2016
(51) Int. Cl.: B23H 9/14, B23H 7/20, B23H 7/26

(54) **VERFAHREN UND MESSVORRICHTUNG ZUR ERMITTLUNG DES ELEKTRODENVERSCHLEISSES BEIM FUNKERODIEREN**

(71) Anmelder: Agie Charmilles SA, 6616 Losone (CH)
(72) Erfinder: GRUBER, Hans Peter, 6616 Losone (CH); BERGAMASCHI, Dario, 28828 Gurro (IT)
(74) Vertreter: Fenner, Seraina

(57) **Zusammenfassung**

Die Erfindung betrifft ein Verfahren zur Ermittlung der Längenänderung an einem zu bearbeitenden Werkstück (5) einer in einer Einspannvorrichtung (8) einer Funkenerosionsbohrmaschine (1) eingespannten Bohrelektrode (4). Zu Beginn einer Bohrbearbeitung wird eine erste Position der Vorschubachse (Z) der Bohrelektrode (4) gemessen, bei welcher eine oder mehrere erste Funkenentladungen am Werkstück (5) oder bei welcher die Herstellung eines elektrischen Kontakts der Elektrode (4) mit dem Werkstück (5) festgestellt wird. Anschliessend wird die Bohrelektrode nach einem Unterbruch derselben Bohrbearbeitung oder am Ende der selben Bohrbearbeitung entgegen der Vorschubrichtung aus der Bohrung bewegt. Die Erfindung zeichnet sich dadurch aus, dass bei der Rückzugbewegung eine zweite Position der Vorschubachse (Z) gemessen wird, bei welcher eine oder mehrere letzte Funkenentladungen am Werkstück (5) oder ein Abbruch des elektrischen Kontakts der Elektrode (4) mit dem Werkstück (5) festgestellt wird und dass aus der Differenzzwischen der ersten gemessenen Position und der zweiten gemessenen Position der Vorschubachse (Z) die Längenänderung der Elektrode (4) ermittelt wird

## Beschreibung

Die Erfindung betrifft ein Verfahren zur Ermittlung der Längenänderung bzw. Verschleisses einer in einer Einspannvorrichtung einer Funkenerosionsmaschine eingespannten Elektrode.

Das Bohren mittels Funkenerosion (auf Englisch electrical discharge machining, Abkürzung EDM) findet insbesondere im Produktionsumfeld Anwendung, z.B. bei der Herstellung von Kühlbohrungen in Komponenten für Flugzeugtriebwerke, Gasturbinen zur Strom- und Wärmeerzeugung, aber auch zur Herstellung von Spülbohrungen in Schnittwerkzeugen. Es handelt sich hierbei typischerweise um durchgehende Bohrungen. Allerdings kann eine durchgehende Bohrung in einen Hohlraum fallen dem wiederum eine Werkstückwand folgen kann, welche unter Umständen nicht gebohrt werden darf. Im Weiteren ist die Wanddicke von zu bearbeitenden Werkstücken nicht immer genau bekannt. Z.B. kann es vorkommen, dass Kühlluft-Leitstrukturen die Bohrungslänge drastisch verlängern. Ebenso werden reparierte, d.h. aufgeschweisste Komponenten (z.B. auf Turbinenschaufeln) neu bearbeitet.
Bei aufgeschweissten Komponenten ist das Material häufig nicht mehr homogen was zu grösseren Verschleissvariation oder sogar Prozess-Störungen führen kann.

Bei der Herstellung von Kühlbohrungen sind im Werkstück normalerweise zahlreiche Bohrungen einzubringen. Auch werden die Werkstücke in grossen Stückzahlen hergestellt (z.B. Turbinenschaufeln). Im Falle der Flugzeugtriebwerke und Turbinen im Energiebereich können die Komponenten zudem sehr komplex sein. Bei Turbinenschaufeln und Luftleitblechen werden die Bohrungen aus jeweils unterschiedlicher Richtung eingebracht, so dass das Werkstück und die Elektrode in angemessener Weise relativ zueinander positioniert werden müssen. Zur relativen Orientierung von Werkstück und Bohrelektrode werden Funkenerosions-Bohrmaschinen vorzugsweise mit zwei zusätzlichen Rotationsachsen ausgestattet.

Eine typische EDM-Bohrelektrode hat typischerweise eine Gesamtlänge von 400 mm, wovon die Nutzlänge etwa 330 mm beträgt. Die restliche Länge der Bohrelektrode geht fürs Einspannen und das Führen der Bohrelektrode verloren. Beim Bohrerodieren werden praktisch immer Rohrelektroden eingesetzt, um das Dielektrikum an den Funkenspalt zu leiten und insbesondere um die abgetragenen Partikel aus der Bohrung zu spülen. Die Spülung des Funkenspaltes erfolgt also meist mittels Druckspülung durch die Rohrelektrode (60 bis 80 Bar). Der Durchmesserbereich einer Rohrelektrode liegt etwa zwischen 0.2 bis 6 mm, insbesondere 0.3 mm bis 3 mm.

Zum Thema Hochleistungsbohren mittels Funkenerosion wird stellvertretend auf folgende Publikationen hingewiesen:
- Koshy, P., M. Boroumand, and Y. Ziada. 'Breakout Detection in Fast Hole Electrical Discharge Machining'. International Journal of Machine Tools and Manufacture 50, no. 10 (October 2010): 922-25. doi:10.1016/j.ijmachtools.2010.05.006.
- Yilmaz, Oguzhan, and M. Ali Okka. 'Effect of Single and Multi-Channel Electrodes Application on EDM Fast Hole Drilling Performance'. The International Journal of Advanced Manufacturing Technology 51, no. 1-4 (November 2010): 185-94. doi:10.1007/s00170-010-2625-3.
- Leao, Fabio; Pashby, Ian; Whitcomb, Patrick J.; Cuttell, Martyn; Lord, Peter. 'Optimisation of EDM Fast Hole Drilling through an Evaluation of Electrode Geometry - Case Studies - Publications'. Accessed 13 May 2016. http://www.statease.com/pubs/EDMdrillopt.pdf
- Pham, D T, A Ivanov, S Bigot, K Popov, and S Dimov. 'A Study of Micro-Electro Discharge Machining Electrode Wear'. Proceedings of the Institution of Mechanical Engineers, Part C: Journal of Mechanical Engineering Science 221, no. 5 (1 January 2007): 605-12. doi:10.1243/0954406JMES413.

Ganz anders als bei der Senkerosion bei welcher der Verschleiss sehr gering ist, hat man beim Funkerosionsbohren je nach Anwendung mit einem relativen Elektrodenverschleiss von 5 bis 100% und mehr, typischerweise um die 50% zu rechnen. Der relative Verschleiss der Elektrode wird hier in Prozenten der Bohrtiefe angegeben. Bei der Herstellung einer Kühlbohrung in einem Werkstück aus einer Nickellegierung, entsteht etwa 50% Verschleiss an der üblicherweise verwendeten Messingelektrode. Bei der Bohrung in Werkstücken aus Hartmetall, entsteht etwa 50% Verschleiss an der üblicherweise verwendeten Kupferelektrode. Für kleinere Bohrungsdurchmesser werden vorzugsweise Hartmetall-Elektroden verwendet; hier ist teilweise mit Verschleiss von 100% der eingesetzten Rohrelektrode zu rechnen.

Aufgrund des hohen Elektrodenverschleisses sind Funkenerosionsbohrmaschinen regelmässig mit einem automatischen Elektrodenwechsler ausgestattet. In der Regel ist es notwendig die Länge der Rohrelektroden zu kennen um die Spitze der Bohrelektrode in angemessenem Abstand zum Werkstück zu positionieren, aber auch um zu entscheiden ob die nächste Bohrung noch mit der aktuellen Bohrelektrode ausgeführt werden kann oder ob die Bohrelektrode gewechselt werden muss. Zur Messung des Elektrodenverschleisses sind diverse Verfahren bekannt. Im Folgenden werden mit Bezug auf mehrere Figuren die bekannten Messverfahren erklärt. Es zeigen:
- Figur 1: Eine EDM- bzw. Funkenerosionsbohrmaschine gemäss Stand der Technik
- Figur 2: Maschinenkopf einer Funkenerosionsbohrmaschine mit Hauptführung für die Bohrelektrode gemäss Figur 1, inkl. bekannter Messvorrichtungen
- Figur 3: Bohrelektroden-Messung mit Lasermesszelle gemäss Stand der Technik
- Figur 4: Bohrelektroden-Messung mit Referenzfläche gemäss Stand der Technik
- Figur 5: Weiteres Verfahren zur Messung der Elektrodenlänge gemäss Stand der Technik
- Figur 6: Weiteres Verfahren zum Detektieren eines Durchbruches und zur Messung der Elektrodenlänge
- Figur 7: Bohrelektroden-Messung anhand dem erfindungsgemässen Verfahren

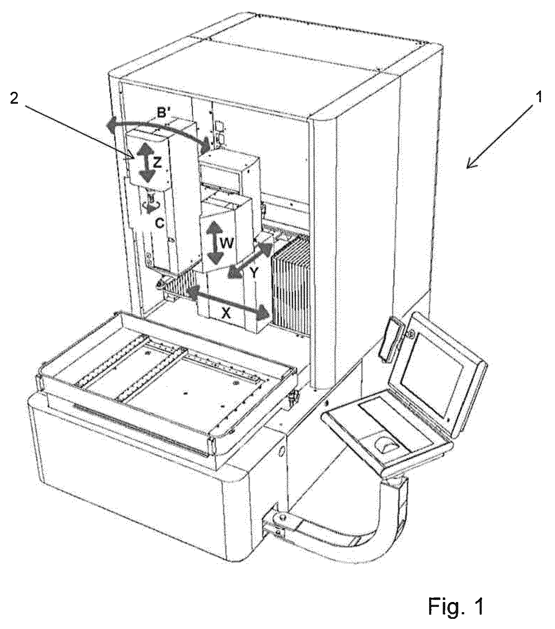

Die Figur 1 zeigt eine Funkenerosionsbohrmaschine 1 nach bekannter Bauart. Üblicherweise ist auf dem Arbeitstisch eine oder mehrere Rotationsachsen (nicht abgebildet) montiert, mit denen das Werkstück (nicht abgebildet) in die gewünschte Lage gegenüber der Bohrachse gebracht wird. Eine EDM- bzw. Funkenerosionsbohrmaschine ist im Vergleich mit konventionellen EDM-Senkerosionsmaschinen weniger massiv gebaut, dafür weist diese in der Regel mehr Freiheitsgrade auf. Figur 1 illustriert die werkzeugseitigen Freiheitsgrade 4 der EDM-Bohrmaschine 1. Die Maschine 1 weist vier lineare Bewegungsachsen X, Y, Z und W und eine Rotationsachse B auf. Die X, Y, W, B', und Z-Achse sind in dieser Reihenfolge in serie angeordnet. In der Z-Achse ist eine Rotationsspindel C angeordnet, welche vorzugsweise während des Erosionsprozesses rotiert. Durch die zusätzliche Rotation der Bohrelektrode wird die Elektrodenspülung unterstützt, so dass abgetragene Partikel besser abgeführt werden.

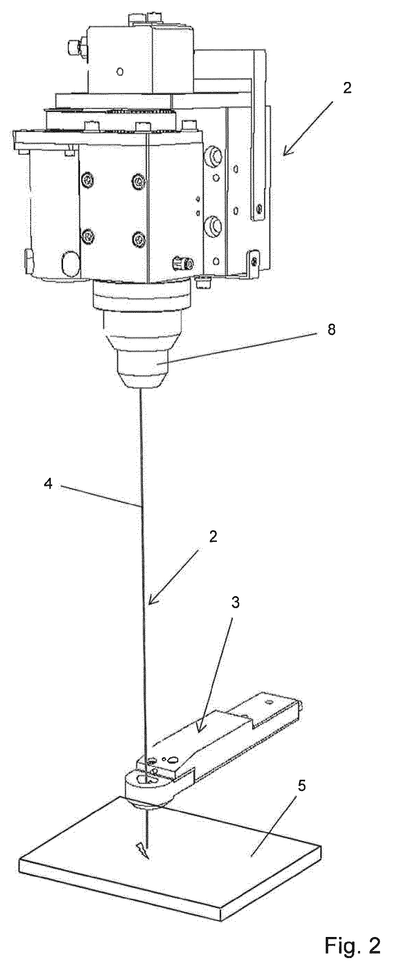

Die Figur 2 zeigt den Maschinenkopf 2 der Funkenerosionsbohrmaschine aus Figur 1. Der Maschinenkopf 2 ist an der Z-Achse montiert, und die Z-Achse ist zusammen mit der Elektrodenführung 3 (Hauptführung) an der W-Achse montiert. Zwischen der Z-Achse und der W-Achse kann wie in Figur 1 dargestellt eine Rotationsachse B' eingebaut sein. Durch Verstellung der Achsen X, Y, W und B' wird der Maschinenkopf 2 zusammen mit der Elektrodenführung 3 in die gewünschte Position gebracht. Das Werkstück kann bei Bedarf mittels weiterer auf dem Maschinentisch montierter Rotationsachsen orientierbar. Während des Bohrprozesses wird die Bohrelektrode mittels der Z-Achse vorgeschoben, während die Elektrodenführung 3 die Bohrelektrode 4 in ihrer axialen Richtung führt. Die Elektrodenführung 3 wird mittels der W-Achse möglichst nahe an der Oberfläche des Werkstückes 5 positioniert. Oben wird die Bohrelektrode durch die Einspannvorrichtung 8 am Maschinenkopf 2 gehalten. Die Funkenerosionsbohrmaschine umfasst u.U. eine oder mehrere weitere Elektrodenführungen (nicht abgebildet) zur Stabilisierung der Elektrode.

Die Maschinenachsen der Funkenerosionsbohrmaschine sind regelmässig mit einem Längenmessgerät oder einem Drehgeber ausgestattet mit dem die Position der Achse hochgenau ermittelt wird, bzw. sind im Falle von Rotationsachsen mit einem Winkelmessgerät ausgestattet.

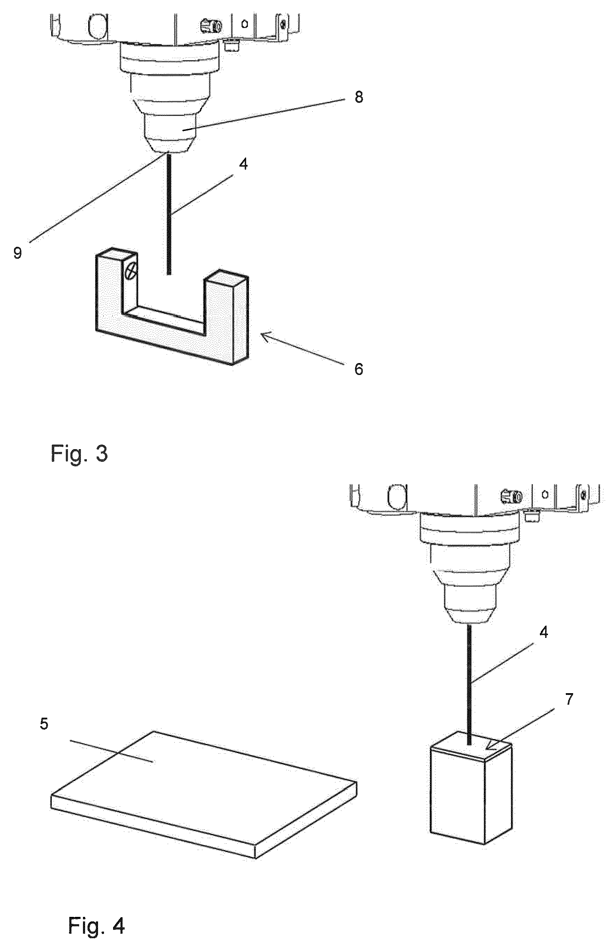

Die folgende Figur 3 zeigt eine bekannte Messvorrichtung zur kontaktlosen Erfassung der Elektrodenlänge. Hierbei wird eine Lasermesszelle 6 zur Detektion der der Spitze der Bohrelektrode 4 verwendet, u wobei die Position der Vorschubachse bei der Detektion der Spitze erfasst. Aus der bekannten Position der Lasermesszelle 6 und der aktuellen Position der Vorschubachse bei Detektion der Spitze der Bohrelektrode 4 kann die Steuerung die Elektrodenlänge ermitteln. Es sind auch aufwendigere Verfahren und Vorrichtungen bekannt, z.B. CCD-Kameras. Mittels geeigneter Bildverarbeitungs-Software kann nicht nur die Position, sondern auch die Form der Elektrodenspitze, die Krümmung der Elektrode, Defekte, Ablagerungen, usw. ermittelt werden. Nebst der Tatsache, dass solche Systeme kostspielig sind, sind diese an separater möglichst geschützter Stelle im Arbeitsraum der EDM-Bohrmaschine angeordnet. Somit müssen hier zusätzliche Bewegungen der Maschinenspindel ausgeführt werden, welche die unproduktive Zeit der EDM-Bohrmaschine erhöhen.

In der Figur 4 wird als weiteres bekanntes Verfahren das elektrische Antasten der Bohrelektrode 4 an eine separate Referenzfläche 7 gezeigt, welche normal zur Z-Achse der Maschine liegt. Separate Referenzflächen 7 an der Werkzeugmaschine bzw. dem Werkzeugtisch können einmalig definiert und allgemein eingesetzt werden. Als Nachteil ist jedoch zu erwähnen, dass die Elektrode 4 von der Bearbeitungsstelle am Werkstück 5 zur Referenzstelle und zurück zur Bearbeitungsstelle gefahren werden muss, was die unproduktive Zeit der Funkenerosionsbohrmaschine ansteigen lässt. Befindet sich die Rotationsachse B' nicht in der Nullstellung (vertikal), so muss auch diese zuerst zur Nullstellung gebracht werden und anschliessend wieder in Bohrrichtung geschwenkt werden.

Im Falle durchgehender Bohrungen ist bekannt, den Durchbruch zu erkennen und dabei die Position der Vorschubachse der Bohrelektrode beim Durchbruch zu erfassen. Zur Durchbrucherkennung sind diverse Verfahren bekannt; diesbezüglich wird auf beispielhaft auf den oben erwähnten Artikel von Koshy et al. hingewiesen. Aus der Position der Vorschubachse zu Beginn der Bohrbearbeitung, der Position der Vorschubachse beim Durchbruch und der Wanddicke kann so der Elektrodenverschleiss abgeleitet werden. Allerdings setzt diese Verfahren eben voraus, dass die Wanddicke genau bekannt ist. Zudem ist dieses Verfahren bei Blindbohrungen (auch Sackloch genannt) nicht anwendbar.

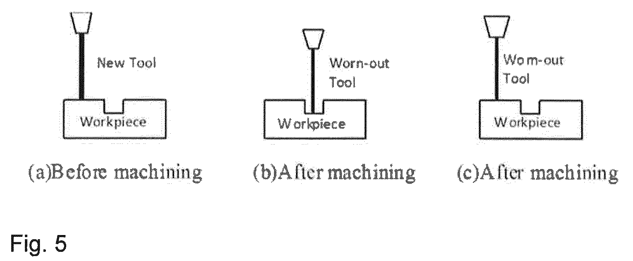

Es ist auch bekannt mit dem oben erwähnten elektrische Antasten eine Bezugsfläche direkt am Werkstück zur Bestimmung des Elektrodenverschleisses zu verwenden, wie dies in Figur 5 dargestellt ist. Hierbei wird zunächst die Position der Vorschubachse bei Berührung der neuen Bohrelektrode an eine Bezugsfläche des Werkstückes durch elektrisches Antasten gemessen, wobei vorzugsweise eine Bezugsfläche in der Nähe der aktuellen Bohrung verwendet wird. Nach einer gewissen Zeit wird die Position der Vorschubachse bei Berührung der gebrauchten Bohrelektrode wieder an der gleichen Bezugsfläche gemessen. Die Differenz der gemessenen Positionen der Vorschubachse entspricht dem Elektrodenverschleiss. Auf diese Weise lässt sich auch die aktuelle Länge der gebrauchten Bohrelektrode ermitteln, und jeweils entscheiden ob die aktuelle Bohrelektrode für die folgende Bohrung eingesetzt werden kann oder ob diese ausgetauscht werden muss. Diese bekannte Art der Elektrodenverschleissmessung am Werkstück ist zwar vergleichsweise einfach und zuverlässig, weist jedoch Nachteile auf. Zum einen ist am Werkstück eine ideale Referenzstelle häufig nicht zu finden. Z.B. besitzen nicht alle Werkstücke eine flache, und vorzugsweise zur Bohrachse orthogonale Bezugsfläche (z.B. eine Turbinenschaufel) oder diese ist nur an einer bestimmten, ev. unzugänglichen Stelle zu finden. Die Maschinenspindel muss dann zuerst an diese bestimmte Stelle des Werkstückes hinbewegt und die Bohrspindel muss ev. geschwenkt werden, um die Referenzfläche in einem passenden Winkel - vorzugsweise 90 Grad - zu berühren. Die hierfür notwendigen Bewegungen sind zeitraubend. Hinzu kommt, dass der Maschinensteuerung für jedes Werkstück die geeignete Referenzfläche durch den Bediener vorgegeben werden muss. Auch dies kann vergleichsweise zeitraubend und fehleranfällig sein.

Vorzugsweise wird daher im Stand der Technik auf die Erkennung des jeweiligen Ereignisses und der entsprechenden Position der Elektroden-Vorschubachse am Werkstück selbst abgestellt, wobei im Wesentlichen die bereits vorhandenen Mittel der EDM-Bohrmaschine verwendet werden können.

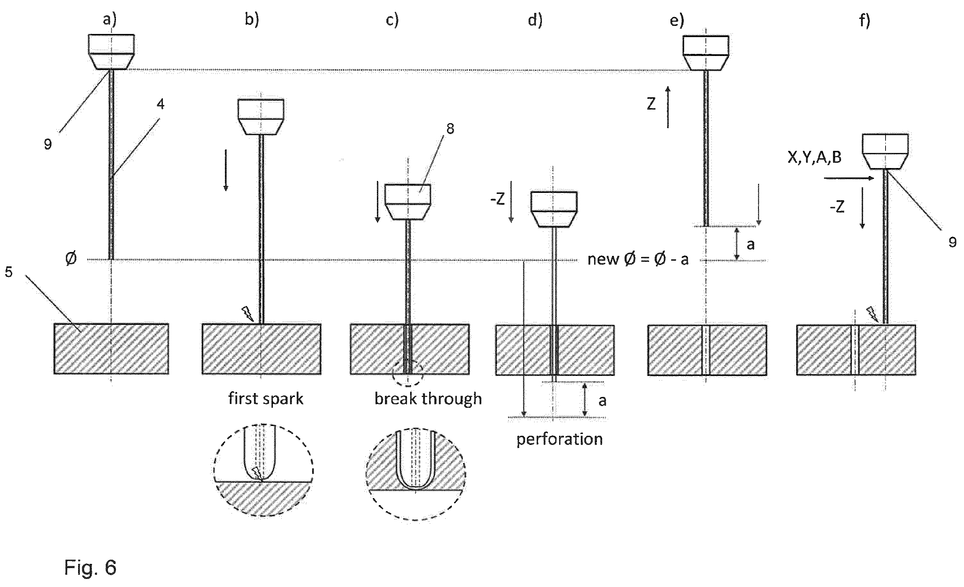

Wie anhand der Figur 6 illustriert werden soll, ist insbesondere die Erkennung der ersten Entladungen, sowie die Erkennung eines Werkstück-Durchbruches von Bedeutung, weil die Prozessparameter der jeweilig neuen Phase unmittelbar angepasst werden müssen.
Vor Aufnahme des Bohrbetriebs - siehe Teilfigur a) - befindet sich der Werkzeugkopf der Maschine mit der eingespannten Elektrode in der Regel in einer sicheren, erhöhten Position (sog. Sicherheitsniveau). In dieser Position können die Maschinenachsen ohne Gefahr verfahren werden. Elektrode und Werkstück können theoretisch mit einer Positioniergeschwindigkeit von bis zu einigen Metern pro Minute (bis 4 m/min) zum Startpunkt der Werkstückbearbeitung positioniert werden. Dieser liegt einige mm vor dem Werkstück entfernt. Nach Orientierung in Bohrrichtung und Positionierung am Startpunkt werden der Generator der Funkerosionsbohrmaschine und die Spülung der Elektrode eingeschaltet. Die Elektrode wird anschliessend mit einer Servo-Geschwindigkeit - wobei die Vorschubgeschwindigkeit laufend durch den EDM Prozess gesteuert ist - vorgeschoben. Solange keine Entladung stattfindet wird die Elektrode hier mit einer maximalen Servo-Vorschubgeschwindigkeit von typischerweise 40mm/min zum Werkstück hin vorgeschoben. Es ist folglich von Vorteil die Position der Elektrodenspitze zu kennen, um den Startpunkt möglichst nahe beim Werkstück setzen zu können und mit erhöhter Positioniergeschwindigkeit an den Startpunkt zu fahren.
Zu Beginn des Erosionsprozesses wird in der Regel die erste bzw. die ersten n Entladungen an der Werkstückoberfläche automatisch erfasst. (sog. "first spark", siehe Teilfigur b)). Die Anzahl Entladungen n wird derart gewählt, dass in zuverlässiger Weise auf den Anfang des Bohrprozesses geschlossen werden kann.

Beispielsweise erfolgt die Detektion nach n=20 Entladungen. Dabei wird die entsprechende Achsposition der Bohrelektroden-Vorschubachse (Z-Achse) zu Beginn der Bohrung gespeichert. Nach der Startphase wird der Bohrprozess mit den jeweils geeigneten EDM Prozessparametern bis zum Durchbruch am Werkstück fortgesetzt ("break through", siehe Teilfigur 6c)), wonach die Prozessparameter wiederum dem entstandenen Durchbruch angepasst werden müssen. Nach dem Durchbruch wird in der Regel um einen frei programmierbaren Durchbruch-Vektor weiter erodiert, (dieser Vektor hat in der Regel keinen Zusammenhang mit der programmierten Tiefe der Bohrung) um auch ausgangsseitig die gewünschte bzw. definierte Bohrungsform zu erzeugen (siehe Teilfigur 6d)). Schliesslich wird der Generator ausgeschaltet und vorzugsweise auch die Spülung abgestellt.

Beim Durchbruch gemäss Teilfigur 6c) ändern sich die Spülverhältnisse ziemlich abrupt. Das Dielektrikum fliesst im Wesentlichen durch den eben erzeugten Durchbruch. Dank Überwachung eines oder mehrerer Prozessparameter, z.B. des Spüldrucks im Zuführbereich, der Entladespannung, des Anteils der Kurzschlussimpulse oder anderer Kriterien zur Bestimmung der Stabilität des Prozesses, usw. können der Durchbruch - z.B. durch die Maschinensteuerung - recht genau detektiert und die Prozessparameter angepasst werden.

Auch beim Durchbruch wird die Position der Vorschubachse (Z) der Bohrelektrode gespeichert. Insofern wäre bereits der Elektrodenverschleiss ableitbar, sofern die Bohrtiefe bekannt ist. Letzteres ist aber nicht immer der Fall, weil die Wanddicke des Werkstückes nicht immer genau bekannt ist, oder weil diese in der Praxis vom Nennwert abweichen kann. Ausserdem wäre es für durchgehende Bohrungen wünschenswert die Bohrtiefe gar nicht angeben bzw. programmieren zu müssen. In den Teilfigur 6d) ist dargestellt wie nach detektiertem Durchbruch die Bohrung fertiggestellt wird.

In der Teilfigur 6e) wird gezeigt, wie die Bohrelektrode anschliessend aus der fertiggestellten Bohrung zurückgezogen wird. Teilfigur 6f) zeigt schliesslich - analog zur Figur 5 - wie die Position der Vorschubachse am Ende des Bohrprozesses durch elektrisches Antasten gemessen wird. Falls, wie in Teilfigur 6f) dargestellt, die nachfolgende Bohrung in der selben Ebene liegt wie die fertiggestellte Bohrung, so dient die neue Messung der Position der Vorschubachse vorzugsweise sowohl zur Bestimmung des Elektrodenverschleisses an der fertiggestellten Bohrung (zusammen mit der Messung der Achsposition bei den ersten Entladungen an der fertiggestellten Bohrung), als auch als erste Position der Vorschubachse für die spätere Berechnung des Elektrodenverschleisses an der neuen Bohrung. Wie bereits unter Figur 5 erwähnt, lässt sich jedoch nicht an jedem Bauteil eine geeignete Referenzfläche finden, wie dies in der Teilfigur f) dargestellt ist. Die daraus entstehenden Nachteile wurden bereits in der Beschreibung zur Figur 5 erläutert. Insofern erscheint es wünschenswert ein einfaches, universelles Verfahren zur Erfassung des Elektrodenverschleisses zu haben.

Wie einleitend erläutert werden Funkenerosions-Bohrmaschinen vorwiegend im Produktionsbetrieb eingesetzt, wo die Zeit für die Fertigstellung einer Bohrung meist unterhalb einer Minute liegt, und somit jede eingesparte Sekunde von Bedeutung ist.

Der vorliegenden Erfindung liegt daher die Aufgabe zugrunde, ein einfaches, speditives und universell anwendbares Verfahren vorzusehen, mit welcher der Elektrodenverschleiss und die Restlänge der Elektrode ermittelt werden kann.

Die Aufgabe wird durch das erfindungsgemässe Verfahren gemäss Anspruch 1 gelöst.

Die Funktionsweise der Erfindung soll im Folgenden erläutert werden. Zur Ermittlung des effektiven Elektrodenverschleisses wird der Erodierprozess beispielsweise unterbrochen, die Position der Vorschubachse der Elektrode bei der aktuellen Bohrtiefe wird abgespeichert und die Elektrode wird aus ihrer operativen Stellung vorzugsweise zuerst seitlich bewegt bis ein elektrischer Kontakt mit der Bohrungswand im Werkstück hergestellt ist, d.h. bis die Elektrode das Werkstück berührt. Die seitliche Bewegung erfolgt mittels der Achsen X, Y und/oder W. Die Elektrode wird vorzugsweise um einen vorbestimmten Betrag seitlich zur Bohrungswand, d.h. orthogonal zur Vorschubrichtung bewegt. Die seitliche Bewegung soll nicht zu gross sein damit es zu keiner Beschädigung des Werkstückes oder der Bohrelektrode kommt. Sie entspricht vorzugsweise dem lateralen Funkenspalt oder etwas grösser. Die Berührung und der hergestellte elektrischen Kontakt bzw. "Kurzschluss" zwischen der Bohrungswand am Werkstück und der Elektrode kann beispielsweise dadurch detektiert werden, dass zwischen Werkstück und Elektrode eine Spannung - hier Positionierspannung Vp genannt - angelegt wird. Berühren sich beide Teile, entspricht dies einem Kurzschluss, sodass die effektiv gemessene Spannung Ve zwischen Werkstück und Elektrode auf einen minimalen Wert fällt. Der Kontakt zwischen Werkstück und Elektrode ist jedoch durch Ablagerungen an der Berührungsstelle, durch die Nachgiebigkeit der Elektrode und weitere Einflüsse beeinträchtigt. Diese Einflüsse erzeugen einen elektrischen Widerstand und verhindern damit, dass diese gemessene Spannung Ve auf 0 Volt fällt. Diese effektiv gemessene Spannung Ve beträgt bei elektrischem Kontakt oft nur wenige Volt. Anschliessend an den hergestellten und detektierten elektrischen Kontakt, fährt die Elektrode entgegen ihrer operativen Erosionsrichtung zurück. Typischerweise ist dieser Rückzug parallel zur vorherigen Erosionsrichtung. Wenn es die Bohrbearbeitung jedoch erforderlich macht kann dieser Rückzug entlang einer definierten Bahn erfolgen. Während dieser Rückzugsbewegung - z.B. in einer erzeugten Werkstückbohrung - wird die Spannung überwacht. Durch die Rückzugsbewegung entsteht ein Schleifkontakt zwischen Werkstück und Elektrode. Nebst den vorgenannten Einflüssen führt die schleifende Bewegung zwischen Werkstück und Elektrode in der Praxis dazu, dass der Spannungsabfall und dementsprechend die messbare Spannung Ve während der Rückzugsbewegung, trotz der physischen Berührung der beiden Teile, stark variiert. Daher wird die gemessene Spannung Ve vorzugsweise mit einer definierten Spannungsschwelle Vs verglichen. Die Spannungsschwelle Vs ist etwas kleiner als die angelegte Positionierspannung Vp. Liegt die gemessene Spannung Ve unterhalb der Spannungsschwelle Vs, so ist von einem elektrischen bzw. physischen Kontakt zwischen Elektrode und Werkstück auszugehen. Überschreitet die gemessene Spannung Ve zwischen Werkstück und Elektrode die Spannungsschwelle Vs, so besteht kein physischer bzw. elektrischer Kontakt mehr zwischen der Elektrode und dem Werkstück. Die Position der Vorschubachse der Elektrode bei welcher die definierte Spannungsschwelle Vs während der Rückzugsbewegung letztmals, d.h. dauerhaft überschritten war wird nun erfindungsgemäss erfasst. Nachdem die gemessene Spannung Ve die Spannungsschwelle Vs überschreitet wird die Rückzugsbewegung fortgesetzt, indem die Vorschubachse weiter um einen bestimmten Betrag b, im Bereich von 0.2mm bis 6mm, typischerweise 0.5 bis 1-mal den Elektrodendurchmesser, zurückbewegt wird. Falls die gemessene Spannung Ve die Spannungsschwelle Vs während dieser Phase der Rückzugsbewegung nicht mehr unterschreitet, so gilt diese als "dauerhaft überschritten" und es ist davon auszugehen, dass sich die Elektrode ausserhalb der Bohrung befindet. Falls die Spannungsschwelle Vs in diese Phase hingegen nochmals unterschritten ist, so wird die Rückzugsbewegung nochmals um den Betrag b fortgesetzt, bis die Spannungsschwelle Vs dauerhaft überschritten ist.

Die Differenz zwischen der erfassten anfänglichen Position der Vorschubachse und der Position der Vorschubachse bei letztmaliger, d.h. dauerhafter Überschreitung der Spannungsschwelle Vs ergibt die effektive, aktuelle Längenänderung der Elektrode. Aus dem Vergleich mit der ursprünglichen - eventuell ebenfalls auf diese Weise gemessenen oder auch vorgegebenen - Elektrodenlänge ergibt sich der effektive Elektrodenverschleiss (sog. Abbrand). Ausgehend von der bekannten Länge einer neuen Elektrode kann also die Position der Vorschubachse bei den ersten Entladungen erfasst bzw. gespeichert werden. Nun kann laufend, d.h. vorzugsweise nach jeder Bohrung oder auch häufiger der aktuelle Elektrodenverschleiss berechnet werden und dementsprechend die verfügbare nutzbare Bohrelektroden-Restlänge in effizienter Weise nachgeführt werden.

Mit dem ermittelten Elektrodenverschleiss kann übrigens die um den aktuellen Verschleiss korrigierte tatsächliche Bohrtiefe berechnet werden. Die tatsächliche Bohrtiefe wird aus der Differenz der Position der Vorschubachse beim Anfang und beim Ende der Bohrung, abzüglich des Verschleisses berechnet. Die Position der Vorschubachse beim Anfang der Bohrung wird vorzugsweise bei der Detektion des bzw. der ersten Funken an der Werkstückoberfläche erfasst. Die Position der Vorschubachse beim Ende der Bohrung wird bei der Detektion des Durchbruchs erfasst (durchgehende Bohrung), bzw. an der tiefsten Stelle der Bohrung (Blindbohrung). Die Bestimmung der tatsächlichen Bohrtiefe ist insbesondere bei Blindbohrungen von Bedeutung, aber auch bei besonders tiefen durchgehenden Bohrungen, wo die Bohrung aufgrund des Elektrodenverschleisses nicht mit einer einzigen Elektrode hergestellt werden kann. Bei einer durchgehenden Bohrung entspricht die tatsächliche Bohrtiefe im Wesentlichen der Wanddicke des Werkstücks; diese Information ist ebenfalls zur Kontrolle dienlich, insbesondere wo die Wanddicke nicht oder nur grob bekannt ist.

Zwecks Ermittlung des Elektrodenverschleiss ist es vorteilhaft als Ausgangspunkt bzw. als erste Position der Vorschubachse der Elektrode diejenige Achsposition zu nehmen bzw. abzuspeichern, bei welcher der erste Funken an der aktuellen Bearbeitungs- bzw. Erosionsstelle des Werkstückes, z.B. wo die anstehende Bohrung mittels Erosionsprozess erfolgen wird ("first spark"). Die spätere Berechnung des Elektrodenverschleisses kann gemäss der vorangehenden Beschreibung des erfindungsgemässen Verfahrens erfolgen, d.h. bis zur Ermittlung des oben genannten "last spark". Das erfindungsgemässe Verfahren ist demgemäss für alle erzeugte Bohrungen anwendbar, i.e. durchgehende Bohrungen sowie Blindbohrungen. Vorzugsweise wird das erfindungsgemässe Verfahren für die Ermittlung des Elektrodenverschleiss und der Elektrodenrestlänge mit bereits vorhandenen Mitteln der Funkenerosionsbohrmaschine durchgeführt.
Die Änderung der Elektrodenlänge kann durch Erfassung der Achsposition der Bohrelektroden-Vorschubachse (Z-Achse) ermittelt werden, z.B. vor und nach der Bohrung. Die Position der Vorschubachse wird vorzugsweise mit den bereits vorhandenen Mitteln der Funkenerosionsbohrmaschine gemessen, z.B. mittels eines Längenmesssystems (insbesondere einem Glasmasstab mit photoelektrischer Ablesung) oder mittels eines an einer Kugelumlaufspindel der Vorschubachse gekoppelten Drehgebers. Die aktuelle Messung der Achsposition wird von einem Kontrollsignal ausgelöst Vorzugsweise werden dieser Prozess und die erfindungsgemässe Berechnung des Elektrodenverschleiss und der Elektrodenrestlänge von der Maschinensteuerung durchgeführt. Vorzugsweise geschieht dies in einem automatisierten Prozess.

Die für das elektrische Antasten angelegte Positionierspannung Vp wird von einer Positionierspannungsquelle zum Beispiel einer Schwachstrom-Niederspannungsquelle geliefert die deutlich unterhalb der Leerlaufspannung des Funkenerosionsprozesses (Spannungswert zwischen Elektrode und Werkstück bevor ein Erosionsfunke entsteht und die Spannung auf eine Erosionsspannung fällt). Die Positionierspannung Vp beträgt bei üblichen Anwendungen etwa 17V. Je nach Generator-Ausführung kann Sie jedoch auch erheblich höher eingestellt werden, z.B. bis 60V. Dabei sind die jeweils gültigen Sicherheitsbestimmungen zu berücksichtigen. Die Spannungsschwelle Vs kann beispielsweise experimentell ermittelt werden oder knapp unterhalb der Positionierspannung Vp definiert werden. Bei einer Positionierspannung Vp von 17V kann die Spannungsschwelle Vs z.B. um 15V liegen. Die zwischen Bohrelektrode und Werkstück gemessene Spannung Ve wird laufend mit einer definierten Spannungsschwelle verglichen, um zu prüfen ob die Elektrode das Werkstück weiterhin berührt oder nicht.

Der Durchmesser einer erodierten Bohrung ist um die doppelte laterale Funkenspaltbreite grösser als der Elektrodendurchmesser. Bei der Rückzugsbewegung ist wichtig, dass die Elektrode stets in Kontakt mit dem Werkstück bzw. der Bohrungswand bleibt, damit nicht fälschlicherweise zu früh die Spannungsschwelle Vs überschritten wird und dies vom Messprozess als "last spark" interpretiert wird. Dazu ist eine Bewegung der Elektrode mit einer Bewegungskomponente normal zum Vorschub, d.h. seitlich zur Bohrungsachse vorgesehen.
Der seitliche Versatz darf nicht zu gross sein, damit sich die Bohrelektrode nur unwesentlich biegt (z.B. bei Elektroden aus Kupfer oder Messing) und nicht bricht (z.B. bei Elektroden aus Hartmetall). Der seitliche Versatz entspricht vorzugsweise einem vordefinierten Mass, und kann für die erfindungsgemässe Messmethode beispielsweise vorgegeben sein, so dass zu Beginn des Messverfahrens die Elektrode unmittelbar um diesen Wert seitlich zum Vorschub versetzt wird. Der seitliche Versatz entspricht z.B. der Funkenspaltbreite zuzüglich bis 50µm.
Alternativ kann der seitliche Versatz auch durch elektrisches Antasten erfolgen indem die Positionierspannung, z.B.17V angelegt wird und die Elektrode wiederum solange seitlich zum Vorschub bewegt wird bis die gemessene Spannung unterhalb eines Spannungsschwellwerts fällt (Kurzschluss), allenfalls zuzüglich 10-20µm. Allerdings ist der seitliche Versatz hier vorzugsweise begrenzt, z.B. wie oben in Abhängigkeit der Funkenspaltbreite zuzüglich bis 50µm, für den Fall, dass die Spannungsschwelle nicht unterschritten wird.
In einer weiteren Ausführungsform wird der seitliche Versatz automatisch auch während Durchführung der erfindungsgemässen Messmethode nachgestellt. Die
Elektrode wird seitlich versetzt sobald die gemessen Spannung eine zweite Spannungsschwelle (z.B. 12V) überschreitet. Die Nachstellung wird gestoppt sobald die gemessen Spannung unter die zweite Schwellspannung fällt, andernfalls wird der seitliche Versatz schrittweise vorgeführt bis zu ein maximaler, seitlicher Versatz erreicht ist (z.B. 50µm).
Vorzugsweise werden weitere Massnahmen zur Sicherstellung der Berührung von Elektrode und Bohrungswand während der Rückzugsbewegung der Elektrode vorgesehen, z.B. wird die Bohrelektrode in Drehbewegung versetzt bzw. bleibt in Drehbewegung. Behelfsweise werden während der Rückzugsbewegung auch Zusatzbewegungen der Elektrode durchgeführt, z.B. durch Überlagerung einer Kreisbewegung oder Pendelbewegung mit einer Auslenkung von etwa 50 µm zur Bohrungsachse der Elektrode.

Gemäss einer, gegenüber der voran beschriebenen Detektion des Kontaktes zwischen Werkstück und Elektrode mittels der Positionierspannung, alternativen Ausführungsform kann die Detektion mit dem Erosionsprozess selbst erfolgen, wobei die Achsposition beim Abbruch der Entladungen während der Rückzugsbewegung ermittelt wird. Hierzu bleibt die Spülung und der Generator der Funkerosionsbohrmaschine auch während der Rückzugsbewegung eingeschaltet, die Elektrode wird bei dieser Ausführungsform jedoch nicht mit der Bohrungswand in Kontakt gebracht. Wie im normalen Bohrbetrieb wird die Leerlaufspannung Vo angelegt (z.B.80V), wodurch trotz des sauberen Funkenspalts während der Rückzugsbewegung laterale Entladungen auftreten können. Die Entladungen werden in bekannter Weise, z.B. beim Unterschreiten einer bestimmten Spannungsschwelle Vd erfasst. Wie erwähnt wird die Elektrode mit einer der Bohrrichtung entgegengesetzte Rückzugsbewegung aus der Bohrung bewegt, wobei die Position der Vorschubachse erfasst wird bei welcher die letzten Funkenentladungen stattfinden. Der Elektrodenverschleiss wird wie zuvor, aus der Differenz der Position der Vorschubachse der Elektrode beim ersten Funken und der Position der Vorschubachse beim letzten Funken berechnet.

Die Prozessparameter können hier derart eingestellt bzw. reduziert werden, dass die Funkenentladungen nur wenig abtragswirksam sind, z.B. durch Einstellung einer längeren Pulspause, einer kurzen Pulsdauer, einer kleineren Stromamplitude, usw., und somit die fertige Bohrung nicht beschädigen.
Das Dielektrikum um die Elektrode ist bei der Rückzugbewegung wesentlich sauberer, sodass die Entladungen seltener erfolgen. Bei Bedarf kann auch hier zuerst eine seitliche Bewegung der Bohrelektrode zur Bohrungswand ausgeführt werden, damit der Abstand zur Bohrungswand reduziert wird. Alternativ kann eine höhere Leerlaufspannung eingestellt werden.

Die Geschwindigkeit der Rückzugsbewegung kann mit beiden Detektionsverfahren - d.h. Detektion durch Anlegen einer Positionierspannung bei Kontaktierung der Bohrungswand bzw. Detektion im Erosionsbetrieb - genügend hoch eingestellt sein, sodass die Messung insgesamt viel schneller erfolgt als mit dem bekannten Antasten einer Referenzfläche an separater Stelle.

Die Spitze einer neu eingespannten Rohrelektrode ist in der Regel flach. Durch den Verschleiss wird die Elektrodenspitze nach kurzer Zeit abgerundet; weitere Informationen sind der einleitend zitierten Veröffentlichung von Pham et al. zu entnehmen. Durch diese Verrundung könnte während der Rückzugsbewegung der Elektrode der vorgenannte "last spark" früher detektiert werden, d.h. beispielsweise bevor die Elektrodenspitze die Bohrung tatsächlich verlässt. Bei der Rückzugsbewegung kann dieser "Formfehler" der Elektrode derart kompensiert werden dass der Kontakt zwischen Elektrode und Werkstück gewahrt wird bis die Elektrode die Bohrung wirklich verlassen hat.
Häufig liegt die Achse der angebrachten Bohrung nicht normal zur Werkstückoberfläche, sondern besitzt einen Einfallwinkel α (eingangsseitig und/oder ausgangsseitig). Die Achsposition an welcher der letzte Kontakt zur Bohrung erfasst wird ändert hier in Abhängigkeit der gewählten Versatzbewegungsrichtung normal zur Bohrachse. Durch die Wahl der rechtwinklig zur Bohrachse liegenden Versatzbewegung kann entschieden werden an welcher Bohrungskante das Werkstück verlassen wird. Der Einfallwinkel zwischen Werkstück und Bohrungsachse ist für jede Bohrung bekannt. Daher kann bei schiefen Bohrungen die Achsposition beim letzten Kontakt auf das Zentrum der Elektrodenspitze der Bohrelektrode korrigiert werden. Z.B. wird die Achsposition des letzten Funkens bei einer Versatzbewegung zur ansteigenden Werkstückoberfläche hin berechnet, indem der Betrag k zur erfassten Achsposition beim letzten Funken addiert wird, wobei k = (1/2 Bohrungsdurchmesser * tan Einfallwinkel α).

Die Wiederholbarkeit der erfindungsgemässen Längen- bzw. Verschleissmessung in ihrer einfachsten Form ist besser 0.3 mm und damit ausreichend, denn es geht wie einleitend erwähnt in erster Linie darum, vor Aufnahme des Bohrprozesses die Elektrodenspitze in minimalem doch sicherem Abstand zur Werkstückoberfläche zu positionieren, und weiterhin festzustellen ob der Bohrprozess mit der aktuellen Elektrodenrestlänge aufgenommen und abgeschlossen werden kann. Das erfindungsgemässe Verfahren ist insbesondere wegen der Einfachheit und Anwendbarkeit im normalen Produktionsprozess einer EDM-Bohrmaschine vorteilhaft anwendbar da es unnötige Positionierbewegungen, die zu erhöhten Nebenzeiten und Kollisionsrisiken führen, überflüssig macht.
Dies ist vor allem bei 5-achsiger Bearbeitung besonders relevant, da dort das Kollisionsrisiko besonders hoch ist.
Bei Bedarf sind weitere Massnahmen möglich um den verrundungsbedingten Messfehler zu minimieren. Dies z.B. durch experimentelle Ermittlung des effektiven Messfehlers oder durch komplementäre Informationen. Insbesondere kann der Messfehler durch Korrelation der verschleissbedingt erzeugten Abrundungen mit einem im EDM Prozess erfassbaren Gradmesser geschätzt werden. Als solchen Gradmesser kann z.B. die mit der aktuellen Elektrode bereits erzeugte Bohrtiefe (mm) herangezogen werden. Weiterer Gradmesser kann aber auch die Summe der mit der aktuellen Elektrode durchgeführten (und abtragswirksamen) Entladungen sein, usw.
Der erwähnte "Gradmesser" für die Schätzung der Elektroden-Abrundung und des entsprechend heranzuziehenden Korrekturwertes für den Messfehler eine spezielle Elektrode wird beispielsweise in einer Tabelle in der Maschinensteuerung abgelegt. Die progressive Abrundung wird hierzu einmalig experimentell ermittelt und in der Tabelle bzw. Speicher der Maschinensteuerung abgelegt.
Der mittels Gradmessers bestimmte Messfehler kann folglich bei der Berechnung des Verschleisses berücksichtigt werden.
Weiterhin kann der verrundungsbedingte Messfehler durch automatische Nachstellung des seitlichen Versatzes zumindest teilweise aufgehoben werden. Während der Rückzugsbewegung wird die Elektrode, wie an früherer Stelle erwähnt, seitlich versetzt sobald die gemessen Spannung eine zweite Spannungsschwelle überschreitet. Erreicht die Elektrodenspitze nun die Kante am Eintritt der Bohrung so wird die Elektrode laufend seitlich nachgestellt, bis maximal um den Radius der Bohrung. Dadurch kann idealerweise die Achsposition beim letzten Kontakt der Elektrodenspitze erfasst werden.

Bevorzugt wird die jeweilige Messung der Position der Vorschubachse einer Plausibilitätsprüfung unterzogen, z.B. durch Vergleich mit der vorangehenden Messung und/oder mit hinterlegten Erfahrungswerten für ähnliche Materialkombinationen von Werkstück und Elektrode.

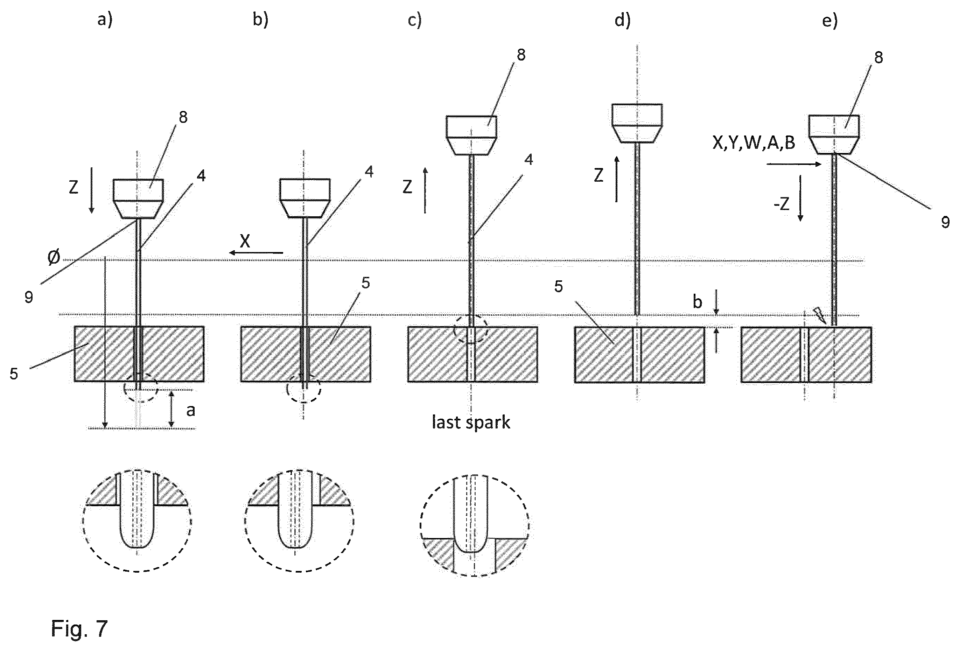

In Figur 7 soll die Anwendung der erfindungsgemässen Messmethode anhand eines Beispiels illustriert werden. In der Teilfigur 7a) ist der Zustand am Ende eines einzelnen Erodierprozesses dargestellt. Das Bohrloch am Werkstück 5 ist fertiggestellt und die Bohrelektrode 4 weist aufgrund ihres Verschleisses eine verkürzte Länge auf. Da die ursprüngliche Länge der Bohrelektrode 4 durch anfängliche Längenmessung oder Vorgabe bekannt ist, soll nun nach Abschluss des Erodierprozesses mit Hilfe des erfindungsgemässen Messverfahrens deren Verschleiss a und die aktuelle Elektrodenrestlänge ermittelt werden.

### Ausführungsform 1:.

Für die Messung wird - bei beendetem Erodierprozess - gemäss der nächsten Teilfigur 7b) die Elektrode 4 zunächst aus ihrer operativen Stellung seitlich - d.h. normal zur Bohrrichtung, z.B. in X-Richtung bewegt, bis die Elektrode 4 in elektrischem Kontakt zum Werkstück 5 liegt, bzw. bis die Elektrode 4 das Werkstück 5 berührt. Die Elektrode wird beispielsweise um einen vorbestimmten Betrag seitlich bewegt; damit es zu keiner Beschädigung des Werkstückes 5 oder der Bohrelektrode 4 kommt kann diese Bewegung in mehrere Schritte unterteilt werden. Die Berührung zwischen Werkstück 5 und Elektrode 4 wird beispielsweise durch Anlegen der vorgenannten Positionierspannung detektiert. Bei hergestelltem elektrischen Kontakt bzw. "Kurzschluss" fällt die messbare Spannung zwischen Werkstück und Elektrode von der Positionierspannung auf eine minimale Spannung ab. Anschliessend an den hergestellten und detektierten elektrischen Kontakt zwischen Elektrode 4 und Werkstück 5, fährt gemäss Teilfigur 7b) bis 7d) die Elektrode entgegen der operativen Bohrrichtung zurück, z.B. wie dargestellt in Z-Richtung. Die Positionierspannung liegt auch während dieser Rückzugsbewegung an. Durch die Rückzugsbewegung entsteht wie bereits beschrieben ein Schleifkontakt zwischen dem Werkstück 5 und der Elektrode 4. Die gemessene Spannung während dieser schleifenden Bewegung variiert, so dass eine Spannungsschwelle für die minimale Spannung definiert werden muss, unterhalb welcher von einem elektrischen und damit physischen Kontakt zwischen Elektrode und Werkstück auszugehen ist. Wie erwähnt können diese Spannungsschwelle und die minimale Spannung mittels Tests ermittelt werden. Übersteigt die gemessene Spannung zwischen Werkstück und Elektrode die definierte Spannungsschwelle, vorzugsweise wieder auf die eingestellte Positionierspannung, so besteht kein physischer bzw. elektrischer Kontakt mehr zwischen der Elektrode und dem Werkstück. Die Rückzugsbewegung wird im Abstand b nach dem letzten Kontakt zwischen Elektrode und Werkstück gestoppt. Die Position der Vorschubachse der Elektrode bei welcher die definierte Spannungsschwelle letztmals, bzw. dauerhaft überschritten war wird nun erfindungsgemäss erfasst (sog. "last spark", siehe Teilfigur 7c)).

Die Differenz zwischen der erfassten anfänglichen Position der Vorschubachse Z der Bohrelektrode bei Arbeitsaufnahme (z.B. beim erfassten sog. "first spark") und der aktuellen Position der Vorschubachse Z bei erfolgtem "last spark" ergibt den effektiven Elektrodenverschleiss a (auch: Abbrand). Die Elektrodenrestlänge wird aus der anfänglich verfügbaren Elektrodenlänge (z.B. 330mm) und dem aktuellen Elektrodenverschleiss laufend neu berechnet um die aktuell verfügbare Länge zu kennen und den Zeitpunkt für den Austausch der Elektrode festzulegen.

Nach Fertigstellung einer Bohrung bzw. Beendigung der Rückzugsbewegung befindet sich die Spitze der Elektrode gemäss vorangehender Beschreibung in einem verhältnismässig kleinen Abstand b über der Werkstückoberfläche, wie in Teilfigur 7d) dargestellt (ausserhalb der Bohrung). Häufig können Werkstück und Elektrode ausgehend von dieser Position der Elektrodenspitze unmittelbar, d.h. ohne weitere Rückzugbewegung, mittels der Achsen X, Y, W, B', A und/oder B neu positioniert und/oder orientiert werden. Diese besonders effiziente Methode ist z.B. immer dort anwendbar, wo eine Reihe von Bohrungen an einem im Wesentlichen stetigen Bereich des Werkstücks eingebracht werden muss.

Bei Bedarf wird der Abstand zwischen Werkstück und Elektrode vor der Neupositionierung/Neuorientierung erhöht, indem die Elektrode weiter auf die Sicherheitsebene zurückbewegt wird, z.B. bei Bohrung an einem anderen Bereich des Werkstücks, oder bei einem neuen Werkstück. Die Vorschubachse der Bohrelektrode kann nach der Neupositionierung/ Neuorientierung mit hoher Geschwindigkeit in die Nähe des Werkstücks bewegt werden. Während der Neupositionierung/ Neuorientierung kann eine Kollisionsschutzschaltung aktiviert werden, damit eine unerwartete Berührung der Bohrelektrode 2 und/oder Elektrodenführung 3 mit dem Werkstück erfasst wird und die Achsbewegungen gestoppt werden.

Zu Beginn der neuen Bohrung gemäss Teilfigur 7e) wird wiederum die erste Entladung ermittelt, und das Verfahren wiederholt.

### Ausführungsform 2:

In einer weiteren, noch einfacheren Alternative des erfindungsgemässen Verfahrens kann anstelle der anfänglichen seitlichen Bewegung der Elektrode zwecks Berührung des Werkstückes und Anlegung einer Positionierspannung der Erosionsprozess einfach fortgesetzt werden. Es gibt hierbei keine seitliche Bewegung der Elektrode und der Generator bleibt während der Rückzugsbewegung der Elektrode weiterhin eingeschaltet. Der damit fortgesetzte Erosionsprozess bleibt dabei - wie während der normalen Werkstückbearbeitung - überwacht (z.B. Entladestrom, Leerlaufspannung, Zündverzögerung etc. werden überwacht). Bleiben die Entladungen trotz angelegter Leerlaufspannung aus, so befindet sich die Elektrodenspitze ausserhalb des Werkstückes und die Position der Elektrode bei der letzten erfolgten Entladung entspricht dem vorangehend genannten "last spark".

Diese Alternative kann beispielsweise weiter optimiert werden indem der Takt der erzeugten Erosionsimpulse am Generator herabgesetzt werden, so dass der Erosionsprozess bei der Längenmessung nur mit tieferer Intensität fortgeführt wird und das Werkstück während der Rückzugsbewegung keiner übermässigen Materialabtragung ausgesetzt ist.

Die vorliegende Erfindung ist nicht auf die explizit genannten Möglichkeiten und Ausführungsformen beschränkt. Diese Varianten sind vielmehr als Anregung für den Fachmann gedacht, um die Erfindungsidee möglichst günstig umzusetzen.

### Bezugszeichenliste

- 1: Funkenerosionsbohrmaschine bzw. EDM-Bohrmaschine
- 2: Maschinenkopf
- 3: Elektrodenführung
- 4: Bohrelektrode
- 5: Werkstück
- 6: Lasermesszelle
- 7: Referenzfläche
- 8: Einspannvorrichtung für die Bohrelektrode im Maschinenkopf
- 9: Basis der eingespannten Elektrode

## Patentansprüche

1. Verfahren zur Ermittlung der Längenänderung einer in einer Einspannvorrichtung (8) einer Funkenerosionsbohrmaschine (1) eingespannten Bohrelektrode (4), an einem zu bearbeitenden Werkstück (5),
wobei zu Beginn einer Bohrbearbeitung eine erste Position der Vorschubachse (Z) der Bohrelektrode (4) gemessen wird, bei welcher eine oder mehrere ersten Funkenentladungen am Werkstück (5) oder bei welcher die Herstellung eines elektrischen Kontakts der Elektrode (4) mit dem Werkstück (5) festgestellt wird und
wobei die Bohrelektrode nach einem Unterbruch derselben Bohrbearbeitung oder am Ende der selben Bohrbearbeitung entgegen der Vorschubrichtung aus der Bohrung bewegt wird, **dadurch gekennzeichnet, dass** bei der Rückzugbewegung eine zweite Position der Vorschubachse (Z) gemessen wird, bei welcher eine oder mehrere letzten Funkenentladungen am Werkstück (5) oder ein Abbruch des elektrischen Kontakts der Elektrode (4) mit dem Werkstück (5) festgestellt wird und dass
aus der Differenzzwischen der ersten gemessenen Position und der zweiten gemessenen Position der Vorschubachse (Z) die Längenänderung der Elektrode (4) ermittelt wird.

2. Verfahren zur Ermittlung der Längenänderung einer Elektrode (4) gemäss Anspruch 1, **dadurch gekennzeichnet, dass** zur zweiten Messung der Position der Vorschubachse (Z) die folgenden Schritte nacheinander erfolgen:
- der Erosionsprozess wird gestoppt,
- die Elektrode (4) wird, mit einer Bewegungskomponente orthogonal zur Vorschubrichtung in Richtung Werkstück (5) bewegt bis ein elektrischer Kontakt zwischen Elektrode (4) und einer Bohrungswand am Werkstück (5) entsteht,
- die Elektrode (4) anschliessend entgegen der Erosionsrichtung bewegt wird bis der elektrische Kontakt zwischen Werkstück (5) und Elektrode (4) abbricht.

3. Verfahren zur Ermittlung der Längenänderung einer Elektrode (4) gemäss Anspruch 2, **dadurch gekennzeichnet, dass** die Bewegung der Elektrode (4) in Richtung Werkstück (5) durch einen unmittelbaren seitlichen Versatz erfolgt, wobei dieser seitliche Versatz einen vorgegebenen Wert beträgt, typischerweise entspricht dieser vorgegebenen Wert der Funkenspaltbreite zuzüglich bis zu 50µm.

4. Verfahren zur Ermittlung der Längenänderung einer Elektrode (4) gemäss Anspruch 1, **dadurch gekennzeichnet, dass** zur Durchführung der zweiten Messung die folgenden Schritte nacheinander erfolgen:
- der Erosionsprozess wird nicht unterbrochen,
- die Elektrode (4) wird entgegen der Erosionsrichtung bewegt wird bis der letzte oder mehrere letzte Funkenladungen des Erosionsprozesses am Werkstück (5) ergehen.

5. Verfahren zur Ermittlung der Längenänderung einer Elektrode (4) gemäss Anspruch 1 oder 2, **dadurch gekennzeichnet, dass** ein elektrischer Kontakt zwischen Elektrode (4) und Werkstück (5) dadurch detektiert wird, dass eine Positionierspannung Vp zwischen Elektrode (4) und Werkstück (5) angelegt wird und das die effektive Spannung Ve zwischen Elektrode (4) und Werkstück (5) gemessen wird, wobei die Unterschreitung einer definierten Spannungsschwelle Vs, welche kleiner wie die Positionierspannung Vp ist, durch die gemessene Spannung Ve als elektrischer Kontakt zwischen Elektrode (4) und Werkstück (5) ausgelegt wird und dass die Überschreitung der definierten Spannungsschwelle Vs durch die gemessene Spannung Ve als Abbruch des elektrischen Kontaktes zwischen Elektrode (4) und Werkstück (5) ausgelegt wird.

6. Verfahren zur Ermittlung der Längenänderung einer Elektrode (4) gemäss Anspruch 5, **dadurch gekennzeichnet, dass** die Positionierspannung Vp einen Wert hat, welcher in einem Bereich von 10 bis 60 Volt liegt, bevorzugt wird die Spannungsschwelle Vs auf einen Wert definiert, welcher 0.1 bis 3 Volt tiefer liegt als die gewählte Positionierspannung Vp.

7. Verfahren zur Ermittlung der Längenänderung einer Elektrode (4) gemäss Anspruch 1 oder 4, **dadurch gekennzeichnet, dass** für die Detektion der ersten Funkenentladung oder der ersten Funkenentladungen zwischen Elektrode (4) und Werkstück (5) eine Erosionsspannung, vorzugsweise die Leerlaufspannung des Erosionsprozesses, angelegt wird.

8. Verfahren zur Ermittlung der Längenänderung einer Elektrode (4) gemäss Anspruch 1, 4 oder 7, **dadurch gekennzeichnet, dass** für die Detektion der letzten Funkenentladung oder der letzten Funkenentladungen zwischen Elektrode (4) und Werkstück (5) eine Leerlaufspannung des Erosionsprozesses angelegt ist.

9. Verfahren zur Ermittlung der Längenänderung einer Elektrode (4) gemäss einem der vorangehenden Ansprüche, **dadurch gekennzeichnet, dass** die zweite, spätere Messung der zweiten Position der eingespannten Elektrode (4) einer Plausibilitätsprüfung unterzogen wird.

10. Verfahren zur Ermittlung der Längenänderung einer Elektrode (4) gemäss Anspruch 9, **dadurch gekennzeichnet, dass** der zu erwartenden Messfehler durch Korrelation mit einem von Nutzung der Elektrode (4) abhängigen Gradmesser bestimmt wird, vorzugsweise wird die Nutzung der eingespannten Elektrode (4) und der Gradmesser für den zu erwartenden Messfehler durch die mit der eingespannten Elektrode (4) erzeugte Erosionstiefe am Werkstück oder durch die Summe der mit der eingespannten Elektrode (4) durchgeführten Entladungen bestimmt, besonders bevorzugt basiert der Gradmesser für den zu erwartenden Messfehler auf hinterlegte Erfahrungswerte.

11. Messvorrichtung für Funkerosionsbohrmaschinen zur Ermittlung der Längenänderung einer in der Funkerosionsbohrmaschine eingespannten Elektrode (4), **dadurch gekennzeichnet, dass** die Messvorrichtung die Längenänderung der Elektrode (4) gemäss einem der vorangehenden Verfahrensansprüche ermittelt.

12. Funkenerosionsbohrmaschine oder Maschinensteuerung für Funkenerosionsbohrmaschine ausgestattet mit einer Messvorrichtung gemäss Anspruch 11.

13. Funkenerosionsbohrmaschine gemäss Anspruch 122, **dadurch gekennzeichnet, dass** die Elektrode (4) rotationssymmetrisch ist und dass bei Ermittlung der Längenänderung die Elektrode (4) in Drehbewegung versetzt wird, vorzugsweise wird die Drehbewegung von einer Kreisbewegung oder Pendelbewegung mit einer Auslenkung von etwa 50 µm zur Drehsachse der Elektrode (4) überlagert.
